# EUROPEAN PATENT APPLICATION

(11) **EP 1 674 503 A1**
(43) Date of publication of application: **28.06.2006**
(21) Application number: 05026351.6
(22) Date of filing: 02.12.2005
(51) Int. Cl.: C08J 3/20

(54) **Thermoplastic vulcanizate with high temperature processing aid**

(30) Priority: 27.12.2004 US 22716
(71) Applicant: Carl Freudenberg KG, 69469 Weinheim (DE)
(72) Inventor: Park, Edward Hosung, Saline MI 48176 (US)

(57) **Abstract**

Processable rubber compositions contain a vulcanized fluorocarbon elastomer dispersed in a matrix of a thermoplastic polymeric material. In one embodiment the matrix forms a continuous phase and the vulcanized elastomeric material is in the form of particles forming a non-continuous phase. The compositions are made by combining a curative, an uncured fluorocarbon elastomer, a high temperature processing aid and a thermoplastic material, and heating the mixture at a temperature and for a time sufficient to effect vulcanization of the elastomeric material, while mechanical energy is applied to mix the mixture during the heating step. Shaped articles such as seals, gaskets, O-rings, and hoses may be readily formed from the rubber compositions according to conventional thermoplastic processes such as blow molding, injection molding, and extrusion.

## Description

### BACKGROUND

The present invention relates to thermoplastic vulcanizate. Embodiments include thermoprocessable compositions that contain a thermoplastic resin phase and a dispersed amorphous vulcanized elastomer phase, with certain high temperature processing aids. It also relates to shaft seal and gasket type material made from the compositions, and methods for their production by dynamic vulcanization techniques.

Cured elastomeric materials have a desirable set of physical properties typical of the elastomeric state. They show a high tendency to return to their original size and shape following removal of a deforming force, and they retain physical properties after repeated cycles of stretching, including strain levels up to 1000%. Based on these properties, the materials are generally useful for making shaped articles such as seals and gaskets.

Because they are thermoset materials, cured elastomeric materials can not generally be processed by conventional thermoplastic techniques such as injection molding, extrusion, or blow molding. Rather, articles must be fashioned from elastomeric materials by high temperature curing and compression molding. Although these and other rubber compounding operations are conventional and known, they nevertheless tend to be more expensive and require higher capital investment than the relatively simpler thermoplastic processing techniques. Another drawback is that scrap generated in the manufacturing process is difficult to recycle and reuse, which further adds to the cost of manufacturing such articles.

In today's automobile engines, the high temperatures of use have led to the development of a new generation of lubricants containing a high level of basic materials such as amines. Articles made from elastomeric materials, such as seals and gaskets, are in contact with such fluids during use, and are subject to a wide variety of challenging environmental conditions, including exposure to high temperature, contact with corrosive chemicals, and high wear conditions during normal use. Accordingly, it is desirable to make such articles from materials that combine elastomeric properties and stability or resistance to the environmental conditions.

Fluorocarbon elastomers have been developed that are highly resistant to the basic compounds found in the lubricating oils and greases. Such elastomers include those based on copolymers of tetrafluoroethylene and propylene. However, as a thermoset material, such cured fluorocarbon elastomers are subject to the processing disadvantages noted above. Thus, it would be desirable to provide an elastomeric or rubber composition that would combine a chemical resistance with the advantages of thermoplastic processability.

### SUMMARY

The present invention provides elastomeric compositions, and methods for making them. Embodiments include compositions comprising a cured fluorocarbon elastomer dispersed in a thermoplastic matrix, wherein the cured fluorocarbon elastomer is present as a discrete phase or a phase co-continuous with the matrix. Also provided are compositions made by a process comprising dynamically vulcanizing a fluorocarbon elastomer in the presence of a fluorine-containing thermoplastic material and a high temperature processing aid. Methods include those comprising:
- (a): forming a mixture of a fluorocarbon elastomer with a thermoplastic material;
- (b): adding a high temperature processing aid; and
- (c): dynamically vulcanizing the mixture.
In various embodiments, the high temperature processing aid is selected from the group consisting of a functionalized perfluoropolyether, a blend of linear fatty alcohols, an organosilicone compound, and mixtures thereof.

Shaped articles may be readily formed from the rubber compositions containing high temperature processing aids according to conventional thermoplastic processes such as blow molding, injection molding, and extrusion. Examples of useful articles include seals, gaskets, O-rings, and hoses.

It has been found that the compositions and methods of this invention afford advantages over compositions and methods among those known in the art. Such advantages include one or more of improved physical characteristics, reduced manufacturing cost, and enhanced recyclability of material. Further benefits and embodiments of the present invention are apparent from the description set forth herein.

### DESCRIPTION

The following definitions and non-limiting guidelines must be considered in reviewing the description of this invention set forth herein.

The headings (such as "Introduction" and "Summary,") and sub-headings (such as "Elastomeric Material") used herein are intended only for general organization of topics within the disclosure of the invention, and are not intended to limit the disclosure of the invention or any aspect thereof. In particular, subject matter disclosed in the "Introduction" may include aspects of technology within the scope of the invention, and may not constitute a recitation of prior art. Subject matter disclosed in the "Summary" is not an exhaustive or complete disclosure of the entire scope of the invention or any embodiments thereof.

The citation of references herein does not constitute an admission that those references are prior art or have any relevance to the patentability of the invention disclosed herein. All references cited in the Description section of this specification are hereby incorporated by reference in their entirety.

The description and specific examples, while indicating embodiments of the invention, are intended for purposes of illustration only and are not intended to limit the scope of the invention. Moreover, recitation of multiple embodiments having stated features is not intended to exclude other embodiments having additional features, or other embodiments incorporating different combinations of the stated features. Specific Examples are provided for illustrative purposes of how to make, use and practice the compositions and methods of this invention and, unless explicitly stated otherwise, are not intended to be a representation that given embodiments of this invention have, or have not, been made or tested.

As used herein, the words "preferred" and "preferably" refer to embodiments of the invention that afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

As used herein, the word "include," and its variants, is intended to be non-limiting, such that recitation of items in a list is not to the exclusion of other like items that may also be useful in the materials, compositions, devices, and methods of this invention.

Processable rubber compositions are provided that contain a vulcanized elastomeric material dispersed in a thermoplastic matrix. The vulcanized elastomeric material is the product of vulcanizing, crosslinking, or curing a fluorocarbon elastomer in the presence of a high temperature processing aid. The processable rubber compositions may be processed by conventional thermoplastic techniques to form shaped articles having physical properties that make them useful in a number of applications calling for elastomeric properties.

### Elastomeric Material:

Preferred fluorocarbon elastomers include commercially available copolymers of one or more fluorine containing monomers, chiefly vinylidene fluoride (VDF), hexafluoropropylene (HFP), tetrafluoroethylene (TFE), and perfluorovinyl ethers (PFVE). Preferred PFVE include those with a C1-8 perfluoroalkyl group, preferably perfluoroalkyl groups with 1 to 6 carbons, and particularly perfluoromethyl vinyl ether and perfluoropropyl vinyl ether. In addition, the copolymers may also contain repeating units derived from olefins such as ethylene (Et) and propylene (Pr). The copolymers may also contain relatively minor amounts of cure site monomers (CSM), discussed further below. Preferred copolymer fluorocarbon elastomers include VDF/HFP, VDF/HFP/CSM, VDF/HFP/TFE, VDF/HFP/TFE/CSM, VDF/PFVE/TFE/CSM, TFE/Pr, TFE/Pr/VDF, TFE/Et/PFVE/VDF/CSM, TFE/Et/PFVE/CSM and TFE/PFVE/CSM. The elastomer designation gives the monomers from which the elastomer gums are synthesized. The elastomer gums have viscosities that give a Mooney viscosity in the range generally of about 15-160 (ML1 + 10, large rotor at about 121°C), which can be selected for a combination of flow and physical properties. Elastomer suppliers include Dyneon (3M), Asahi Glass Fluoropolymers, Solvay/Ausimont, Dupont, and Daikin.

### Thermoplastic Matrix:

In one embodiment, the thermoplastic material making up the matrix includes at least one component that is a non-fluorine containing thermoplastic polymer. In another embodiment, the thermoplastic material includes a fluorine containing thermoplastic material. The polymeric material softens and flows upon heating. In one aspect, a thermoplastic material is one the melt viscosity of which can be measured, such as by ASTM D-1238 or D-2116, at a temperature above its melting point.

The thermoplastic material of the invention may be selected to provide enhanced properties of the rubber/thermoplastic combination at elevated temperatures, preferably above 100°C and more preferably at about 150°C and higher. Such thermoplastics include those that maintain physical properties, such as at least one of tensile strength, modulus, and elongation at break to an acceptable degree at the elevated temperature. In a preferred embodiment, the thermoplastics possess physical properties at the elevated temperatures that are superior (i.e. higher tensile strength, higher modulus, and/or higher elongation at break) to those of the cured fluorocarbon elastomer (rubber) at a comparable temperature.

The thermoplastic polymeric material used in the invention may be a thermoplastic elastomer. Thermoplastic elastomers have some physical properties of rubber, such as softness, flexibility and resilience, but may be processed like thermoplastics. A transition from a melt to a solid rubber-like composition occurs fairly rapidly upon cooling. This is in contrast to conventional elastomers, which harden slowly upon heating. Thermoplastic elastomers may be processed on conventional plastic equipment such as injection molders and extruders. Scrap may generally be readily recycled.

Thermoplastic elastomers have a multi-phase structure, wherein the phases are generally intimately mixed. In many cases, the phases are held together by graft or block copolymerization. At least one phase is made of a material that is hard at room temperature but fluid upon heating. Another phase is a softer material that is rubber like at room temperature.

Some thermoplastic elastomers have an A-B-A block copolymer structure, where A represents hard segments and B is a soft segment. Because most polymeric material tend to be incompatible with one another, the hard and soft segments of thermoplastic elastomers tend to associate with one another to form hard and soft phases. For example, the hard segments tend to form spherical regions or domains dispersed in a continuous elastomer phase. At room temperature, the domains are hard and act as physical crosslinks tying together elastomeric chains in a 3-D network. The domains tend to lose strength when the material is heated or dissolved in a solvent.

Other thermoplastic elastomers have a repeating structure represented by (A-B)n, where A represents the hard segments and B the soft segments as described above.

Many thermoplastic elastomers are known. Non-limiting examples of A-B-A type thermoplastic elastomers include polystyrene/polysiloxane/polystyrene, polystyrene/polyethylene-cobutylene/polystyrene, polystyrene/polybutadiene poly-styrene, polystyrene/polyisoprene/polystyrene, poly-α-methyl styrene/polybutadiene/poly-α-methyl styrene, poly-α-methyl styrene/polyisoprene/ poly-α-methyl styrene, and polyethylene/polyethylene-co-butylene/polyethylene.

Non-limiting examples of thermoplastic elastomers having a (A-B)n repeating structure include polyamide/polyether, polysulfone/ polydimethylsiloxane, polyurethane/polyester, polyurethane/polyether, polyester/polyether, polycarbonate/ polydimethylsiloxane, and polycarbonate/polyether. Among the most common commercially available thermoplastic elastomers are those that contain polystyrene as the hard segment. Triblock elastomers are available with polystyrene as the hard segment and either polybutadiene, polyisoprene, or polyethylene-co-butylene as the soft segment. Similarly, styrene butadiene repeating co-polymers are commercially available, as well as polystyrene/polyisoprene repeating polymers.

In a preferred embodiment, a thermoplastic elastomer is used that has alternating blocks of polyamide and polyether. Such materials are commercially available, for example from Atofina under the Pebax® trade name. The polyamide blocks may be derived from a copolymer of a diacid component and a diamine component, or may be prepared by homopolymerization of a cyclic lactam. The polyether block is generally derived from homo- or copolymers of cyclic ethers such as ethylene oxide, propylene oxide, and tetrahydrofuran.

The thermoplastic polymeric material may also be selected from among solid, generally high molecular weight, plastic materials. Preferably, the materials are crystalline or semi-crystalline polymers, and more preferably have a crystallinity of at least 25 percent as measured by differential scanning calorimetry. Amorphous polymers with a suitably high glass transition temperature are also acceptable as the thermoplastic polymeric material. The thermoplastic also preferably has a melt temperature or glass transition temperature in the range from about 80°C to about 350°C, but the melt temperature should generally be lower than the decomposition temperature of the thermoplastic vulcanizate.

Non-limiting examples of thermoplastic polymers include polyolefins, polyesters, nylons, polycarbonates, styrene-acrylonitrile copolymers, polyethylene terephthalate, polybutylene terephthalate, polyamides, polystyrene, polystyrene derivatives, polyphenylene oxide, polyoxymethylene, and fluorine-containing thermoplastics.

Polyolefins are formed by polymerizing α-olefins such as, but not limited to, ethylene, propylene, 1-butene, 1-hexene, 1-octene, 2-methyl-1-propene, 3-methyl-1-pentene, 4-methyl-1-pentene, 5-methyl-1-hexene, and mixtures thereof. Copolymers of ethylene and propylene or ethylene or propylene with another α-olefin such as 1-butene, 1-hexene, 1-octene, 2-methyl-1-propene, 3-methyl-1-pentene, 4-methyl-1-pentene, 5-methyl-1-hexene or mixtures thereof are also contemplated. These homopolymers and copolymers, and blends of them, may be incorporated as the thermoplastic polymeric material of the invention.

Polyester thermoplastics contain repeating ester linking units in the polymer backbone. In one embodiment, they contain repeating units derived from low molecular weight diols and low molecular weight aromatic diacids. Non-limiting examples include the commercially available grades of polyethylene terephthalate and polybutylene terephthalate. Alternatively, the polyesters may be based on aliphatic diols and aliphatic diacids. Exemplary here the copolymers of ethylene glycol or butanediol with adipic acid. In another embodiment, the thermoplastic polyesters are polylactones, prepared by polymerizing a monomer containing both hydroxyl and carboxyl functionality. Polycaprolactone is a non-limiting example of this class of thermoplastic polyester.

Polyamide thermoplastics contain repeating amide linkages in the polymer backbone. In one embodiment, the polyamides contain repeating units derived from diamine and diacid monomers such as the well known nylon 66, a polymer of hexamethylene diamine and adipic acid. Other nylons have structures resulting from varying the size of the diamine and diacid components. Non-limiting examples include nylon 610, nylon 612, nylon 46, and nylon 6/66 copolymer. In another embodiment, the polyamides have a structure resulting from polymerizing a monomer with both amine and carboxyl functionality. Non-limiting examples include nylon 6 (polycaprolactam), nylon 11, and nylon 12.

Other polyamides made from diamine and diacid components include the high temperature aromatic polyamides containing repeating units derived from diamines and aromatic diacids such as terephthalic acid. Commercially available examples of these include PA6T (a copolymer of hexanediamine and terephthalic acid), and PA9T (a copolymer of nonanediamine and terephthalic acid), sold by Kuraray under the Genestar tradename. For some applications, the melting point of some aromatic polyamides may be higher than optimum for thermoplastic processing. In such cases, the melting point may be lowered by preparing appropriate copolymers. In a non-limiting example, in the case of PA6T, which has a melting temperature of about 370°C, it is possible to in effect lower the melting point to below a moldable temperature of about 320°C by including an effective amount of a non-aromatic diacid such as adipic acid when making the polymer.

In another preferred embodiment, an aromatic polyamide is used based on a copolymer of an aromatic diacid such as terephthalic acid and a diamine containing greater than 6 carbon atoms, preferably containing 9 carbon atoms or more. The upper limit of the length of the carbon chain of the diamine is limited from a practical standpoint by the availability of suitable monomers for the polymer synthesis. As a rule, suitable diamines include those having from 7 to 20 carbon atoms, preferably in the range of 9 to 15 carbons, and more preferably in the range from 9 to 12 carbons. Preferred embodiments include C9, C10, and C11 diamine based aromatic polyamides. It is believed that such aromatic polyamides exhibit an increase level of solvent resistance based on the oleophilic nature of the carbon chain having greater than 6 carbons. If desired to reduce the melting point below a preferred molding temperature (typically 320°C or lower), the aromatic polyamide based on diamines of greater than 6 carbons may contain an effective amount of a non-aromatic diacid, as discussed above with the aromatic polyamide based on a 6 carbon diamine. Such effective amount of diacid should be enough to lower the melting point into a desired molding temperature range, without unacceptably affecting the desired solvent resistance properties.

Other non-limiting examples of high temperature thermoplastics include polyphenylene sulfide, liquid crystal polymers, and high temperature polyimides. Liquid crystal polymers are based chemically on linear polymers containing repeating linear aromatic rings. Because of the aromatic structure, the materials form domains in the nematic melt state with a characteristic spacing detectable by x-ray diffraction methods. Examples of materials include copolymers of hydroxybenzoic acid, or copolymers of ethylene glycol and linear aromatic diesters such as terephthalic acid or naphthalene dicarboxylic acid.

High temperature thermoplastic polyimides include the polymeric reaction products of aromatic dianhydrides and aromatic diamines. They are commercially available from a number of sources. Exemplary is a copolymer of 1,4-benzenediamine and 1,2,4,5-benzenetetracarboxylic acid dianhydride.

In one embodiment, the matrix comprises at least one non-fluorine containing thermoplastic, such as those described above. Thermoplastic fluorine-containing polymers may be selected from a wide range of polymers and commercial products. The polymers are melt processable - they soften and flow when heated, and can be readily processed in thermoplastic techniques such as injection molding, extrusion, compression molding, and blow molding. The materials are readily recyclable by melting and re-processing.

The thermoplastic polymers may be fully fluorinated or partially fluorinated. Fully fluorinated thermoplastic polymers include copolymers of tetrafluoroethylene and perfluoroalkyl vinyl ethers. The perfluoroalkyl group is preferably of 1 to 6 carbon atoms. Other examples of copolymers are PFA (copolymer of TFE and perfluoropropyl vinyl ether) and MFA (copolymer of TFE and perfluoromethyl vinyl ether). Other examples of fully fluorinated thermoplastic polymers include copolymers of TFE with perfluoroolefins of 3 to 8 carbon atoms. Non-limiting examples include FEP (copolymer of TFE and hexafluoropropylene).

Partially fluorinated thermoplastic polymers include E-TFE (copolymer of ethylene and TFE), E-CTFE (copolymer of ethylene and chlorotrifluoroethylene), and PVDF (polyvinylidene fluoride). A number of thermoplastic copolymers of vinylidene fluoride are also suitable thermoplastic polymers for use in the invention. These include, without limitation, copolymers with perfluoroolefins such as hexafluoropropylene, and copolymers with chlorotrifluoroethylene.

Thermoplastic terpolymers may also be used. These include thermoplastic terpolymers of TFE, HFP, and vinylidene fluoride.

These and other fluorine-containing thermoplastic materials are commercially available. Suppliers include Dyneon (3M), Daikin, Asahi Glass Fluoroplastics, Solvay/Ausimont and DuPont.

### High Temperature Processing Aid:

Thermoplastic resins have high melt viscosity and low fluidity, and thus are susceptible to thermal decomposition. Often they have narrow processable molding conditions, and tend to stick or adhere to a metal surface of a device in processing at high temperatures. Fluorocarbon elastomers are relatively viscous in comparison to other elastomers. In order to process such resins and elastomers using conventional equipment, it is known to incorporate copolymers, softeners and lubricants into the mixture prior to processing and vulcanization. Typically, copolymers compatible with the resins are added as a processing aid. Mixing two or more polymers allows for the optimization of balancing physical and processing properties. The use of polymer blends changes the processing behavior of one polymer by the addition of another. Processing aid polymer blends are different from standard polymer blends, however, in that processing aids are used in small quantities so their effect on the final physical properties of the final mixture is minimized. Likewise, the degree of effectiveness of other softeners and lubricants added into the elastomer is proportionate to their relative amount, but it is not feasible to use high proportions of a processing aid because it adversely affects the otherwise excellent properties of the final vulcanizate.

Processing aids can comprise small molecules, oligomers, or high molecular weight polymers. Typical functions of processing aids include the promotion of fusion, modification of melt rheology (i.e., increasing melt elasticity, reducing melt viscosity and increasing melt flow, reducing melt fracture and improving surface quality), lubrication and preventing the material from adhering to hot metal surfaces, and the promotion of uniform dispersion of fillers, cross-linked impact modifiers, pigments and other insoluble particles in the matrix. Processing aids improve the appearance of the finished product and shorten mixing times.

A wide variety of processing aids may be used during the processing of thermoplastic vulcanizate compositions containing cured fluorocarbon elastomers, including plasticizers to aid in melt processing (the application of pressure and temperature for some time period to cause a thermally plasticized polymer to flow), and as mold release agents. For certain applications, however, fatty acids from the low temperature processing aids used in the formulations degrade during high temperature processing and generate gases and vapors, thereby causing a porous structure and/or rough surface finish. These gases and vapors compromise surface finish and structural integrity of processed parts.

The compositions of the present invention comprise a high temperature processing aid. As referred to herein, a "high temperature processing aid" is a material which is operable in a composition of the invention to improve one or more properties of the composition. Such properties include one or more chemical or physical properties relating to the formulation, function or utility of the composition, such as physical characteristics, performance characteristics, applicability to specific end-use devices or environments, ease of manufacturing the composition, and ease of processing the composition after its manufacture.

Non-limiting examples of typical processing aids include Caranuba wax, phthalate ester plasticizers such as dioctylphthalate (DOP) and dibutylphthalate silicate (DBS), fatty acid salts such zinc stearate and sodium stearate, polyethylene wax, and keramide. In embodiments of the present invention, high temperature processing aids are preferred. Such include, without limitation, linear fatty alcohols such as blends of C10-C28 alcohols, organosilicones, functionalized perfluoropolyethers, and mixtures thereof. One preferred linear fatty alcohol includes a blend of 1-Docosan, 1-Eicosan and 1-Octadecan, commercially available as Nafol 1822B and Nafol 1822-C from Sasol North America. In some embodiments, the compositions may contain about 0.1 to about 15% by weight processing aids, preferably about 0.1 to about 5% by weight, and most preferably about 0.1 % to about 2% by weight.

High temperature process aids such as functionalized perfluoro-polyether can be added in wax form, and greatly enhance the flowability of the fluorocarbon elastomer. Preferably, the wax form has a melting point greater than 50 C. Organosilicone compounds improve flow properties and release behavior in the rubber processing. They can be added in paste form, or can be added as a crumbly powder with the organosilicone compound on an organic carrier as known in the art. Preferred organosilicone compounds have a low volatility at high temperatures and include commercial products such as Struktol WS-280, a silane coupling agent available from Struktol Company of America in Stow, Ohio.

In order to facilitate handling and the incorporation of the high temperature processing aid into the mixture, it may be desirable to add a thickener in the mixture. Preferably, the thickener is a relatively inert inorganic solid, in a powder form, and compatible with the fluorocarbon elastomer, thermoplastic resin and other additives. Suitable fillers include without limitation: metal oxides, such as zinc oxide, aluminum oxide, calcium oxide, magnesium oxide, lead oxide, and others, such as calcium silicate, talc, diatomaceous earth, and mixtures thereof. Typically the addition of thickener from about 1 to about 15 % by weight of thickener to high temperature processing aid will provide a desired consistency.

The incorporation of the high temperature processing aid into thermoprocessable compositions containing cured fluorocarbon elastomers provides many substantial benefits, including significant reduction of rough surface texture and porous structures from the minimized vapor, improved flow and processing for extruded and molded goods, and reduction of shrinkage in the uncured and cured elastomer.

### Curative agent:

In various embodiments, the compositions of the present invention comprise a curative agent, to effect curing of the composition. Useful curative agents include diamines, peroxides, and polyol/onium salt combinations. Diamine curatives have been known since the 1950's. Diamine curatives are relatively slow curing, but offer advantages in several areas. Such curatives are commercially available, for example as Diak-1 from DuPont Dow Elastomers.

Preferred peroxide curative agents are organic peroxides, preferably dialkyl peroxides. In general, an organic peroxide may be selected to function as a curing agent for the composition in the presence of the other ingredients and under the temperatures to be used in the curing operation without causing any harmful amount of curing during mixing or other operations which are to precede the curing operation. A dialkyl peroxide which decomposes at a temperature above 49oC is especially preferred when the composition is to be subjected to processing at elevated temperatures before it is cured. In many cases one will prefer to use a di-tertiarybutyl peroxide having a tertiary carbon atom attached to a peroxy oxygen. Non-limiting examples include 2,5-dimethyl-2,5-di(tert-butylperoxy)-3-hexyne; 2,5-dimethyl-2,5-di(tert-butylperoxy) hexane; and 1,3-bis-(t-butylperoxyisopropyl)benzene. Other non-limiting examples of peroxide curative agents include dicumyl peroxide, dibenzoyl peroxide, tertiary butyl perbenzoate, di[1,3-dimethyl-3-(t-butylperoxy)butyl]carbonate, and the like.

One or more crosslinking co-agents may be combined with the peroxide. Examples include triallyl cyanurate; triallyl isocyanurate; tri(methallyl)-isocyanurate; tris(diallylamine)-s-triazine, triallyl phosphite; N,N-diallyl acrylamide; hexaallyl phosphoramide; N,N,N',N'-tetraallyl terephthalamide; N,N,N',N'-tetraallyl malonamide; trivinyl isocyanurate; 2,4,6-trivinyl methyltrisiloxane; and tri(5-norbornene-2-methylene) cyanurate.

Suitable onium salts are described, for example, in U.S. Pat. Nos. 4,233,421; 4,912,171; and 5,262,490, each of which is incorporated by reference. Examples include triphenylbenzyl phosphonium chloride, tributyl alkyl phosphonium chloride, tributyl benzyl ammonium chloride, tetrabutyl ammonium bromide, and triarylsulfonium chloride.

Another class of useful onium salts is represented by the following formula: 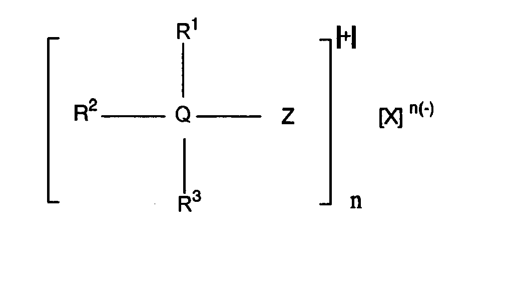 where
- Q: is nitrogen or phosphorus;
- Z: is a hydrogen atom or
is a substituted or unsubstituted, cyclic or acyclic alkyl group having from 4 to about 20 carbon atoms that is terminated with a group of the formula --COOA where A is a hydrogen atom or a NH₄⁺ cation or Z is a group of the formula
--CY₂ COOR' where Y is a hydrogen or halogen atom, or is a substituted or unsubstituted alkyl or aryl group having from 1 to about 6 carbon atoms that may optionally contain one or more quaternary heteroatoms and where R' is a hydrogen atom, a NH₄⁺ cation, an alkyl group, or is an acyclic anhydride, e.g., a group of the formula --COR where R is an alkyl group or is a group that itself contains organoonium (i.e., giving a bis-organo-onium); preferably R' is hydrogen; Z may also be a substituted or unsubstituted, cyclic or acyclic alkyl group having from 4 to about 20 carbon atoms that is terminated with a group of the formula --COOA where A is a hydrogen atom or is a NH₄⁺ cation;

- R₁, R₂, and R₃: are each, independently, a hydrogen atom or an alkyl, aryl, alkenyl, or any combination thereof, each R₁, R₂, and R₃ can be substituted with chlorine, fluorine, bromine, cyano, --OR", or --COOR" where R" is a C₁ to C₂₀ alkyl, aryl, aralkyl, or alkenyl, and any pair of the R₁, R₂, and R_{.3} groups can be connected with each other and with Q to form a heterocyclic ring; one or more of the R₁, R₂, and R₃ groups may also be a group of the formula Z where Z is as defined above;
- X: is an organic or inorganic anion (for example, without limitation, halide, sulfate, acetate, phosphate, phosphonate, hydroxide, alkoxide, phenoxide, or bisphenoxide); and
- n: is a number equal to the valence of the anion X.

The polyol crosslinking agents may be any of those polyhydroxy compounds known in the art to function as a crosslinking agent or co-curative for fluoroelastomers, such as those polyhydroxy compounds disclosed in U.S. Pat. Nos. 4,259,463 (Moggi et al.), U.S. Pat. No. 3,876,654 (Pattison), U.S. Pat. No. 4,233,421 (Worm), and U.S. Defensive Publication T107,801 (Nersasian). Preferred polyols incude aromatic polyhydroxy compounds, aliphatic polyhydroxy compounds, and phenol resins.

Representative aromatic polyhydroxy compounds include any one of the following: di-, tri-, and tetrahydroxybenzenes, -naphthalenes, and - anthracenes, and bisphenols of the Formula 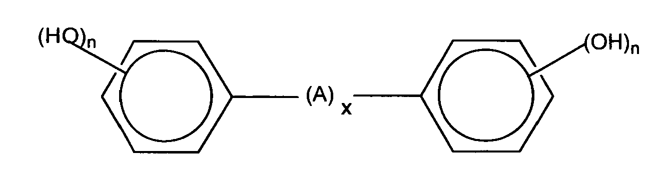 wherein A is a difunctional aliphatic, cycloaliphatic, or aromatic radical of 1 to 13 carbon atoms, or a thio, oxy, carbonyl, or sulfonyl radical, A is optionally substituted with at least one chlorine or fluorine atom, x is 0 or 1, n is 1 or 2, and any aromatic ring of the polyhydroxy compound is optionally substituted with at least one atom of chlorine, fluorine, or bromine atom, or carboxyl or an acyl radical (e.g., --COR, where R is H or a C₁ to C₈ alkyl, aryl or cycloalkyl group) or alkyl radical with, for example, 1 to 8 carbon atoms. It will be understood from the above bisphenol formula III that the --OH groups can be attached in any position (other than number one) in either ring. Blends of two or more such compounds can also be used. A preferred bisphenol compound is Bisphenol AF, which is 2,2-bis(4-hydroxyphenyl)hexafluoropropane. Other non-limiting examples include 4,4'-dihydroxydiphenyl sulfone (Bisphenol S) and 2,2-bis(4-hydroxyphenyl) propane (Bisphenol A). Aromatic polyhydroxy compound, such as hydroquinone may also be used as curative agents. Further non-limiting examples include catechol, resorcinol, 2-methyl resorcinol, 5-methyl resorcinol, 2-methyl hydroquinone, 2,5-dimethyl hydroquinone, and 2-t-butyl hydroquinone, 1,5-dihydroxynaphthalene and 9,10-dihydroxyanthracene.

Aliphatic polyhydroxy compounds may also be used as a polyol curative. Examples include fluoroaliphatic diols, e.g. 1,1,6,6-tetrahydro-octafluorohexanediol, and others such as those described in U.S. Pat. No. 4,358,559 (Holcomb et al.) and references cited therein. Derivatives of polyhydroxy compounds can also be used such as those described in U.S. Pat. No. 4,446,270 (Guenthner et al.) and include, for example, 2-(4-allyloxyphenyl)-2-(4-hydroxyphenyl)propane. Mixtures of two or more of the polyhydroxy compounds can be used.

Phenol resins capable of crosslinking a rubber polymer can be employed as the polyol curative agent.. Reference to phenol resin may include mixtures of these resins. U.S. Pat. Nos. 2,972,600 and 3,287,440 are incorporated herein in this regard. These phenolic resins can be used to obtain the desired level of cure without the use of other curatives or curing agents.

Phenol resin curatives can be made by the condensation of alkyl substituted phenols or unsubstituted phenols with aldehydes, preferably formaldehydes, in an alkaline medium or by condensation of bi-functional phenoldialcohols. The alkyl substituents of the alkyl substituted phenols typically contain 1 to about 10 carbon atoms. Dimethylolphenols or phenolic resins, substituted in para-positions with alkyl groups containing 1 to about 10 carbon atoms, are preferred. Useful commercially available phenol resins include alkylphenol-formaldehyde resin, and bromomethylated alkylphenol-formaldehyde resins.

In one embodiment, phenol resin curative agents may be represented by the general formula 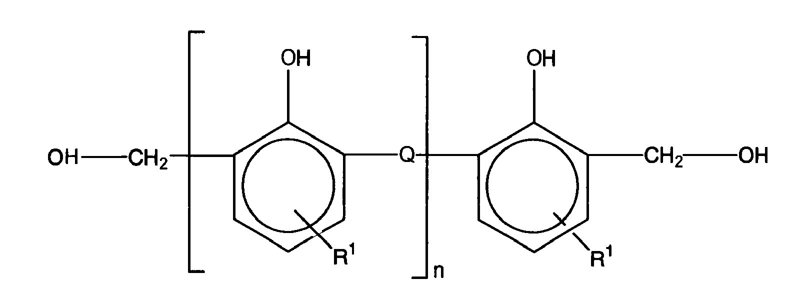 where Q is a divalent radical selected from the group consisting of -CH₂₋-- and--CH₂ --O--CH₂ --; m is zero or a positive integer from 1 to 20 and R' is hydrogen or an organic radical. Preferably, Q is the divalent radical --CH₂ --O--CH₂ --, m is zero or a positive integer from 1 to 10, and R' is hydrogen or an organic radical having less than 20 carbon atoms. In another embodiment, preferably m is zero or a positive integer from 1 to 5 and R' is an organic radical having between 4 and 12 carbon atoms. Other preferred phenol resins are also defined in U.S. Pat. No. 5,952,425, which is incorporated herein by reference.

### Optional Materials:

In various embodiments, plasticizers, extender oils, synthetic processing oils, or a combination thereof are used in the compositions of the invention. The type of processing oil selected will typically be consistent with that ordinarily used in conjunction with the specific rubber or rubbers present in the composition. The extender oils may include, but are not limited to, aromatic, naphthenic, and paraffinic extender oils. Preferred synthetic processing oils include polylinear α-olefins. The extender oils may also include organic esters, alkyl ethers, or combinations thereof. As disclosed in U.S. Pat. No. 5,397,832, it has been found that the addition of certain low to medium molecular weight organic esters and alkyl ether esters to the compositions of the invention lowers the Tg of the thermoplastic and rubber components, and of the overall composition, and improves the low temperatures properties, particularly flexibility and strength. These organic esters and alkyl ether esters generally have a molecular weight that is generally less than about 10,000. Particularly suitable esters include monomeric and oligomeric materials having an average molecular weight below about 2000, and preferably below about 600. In one embodiment, the esters may be either aliphatic mono- or diesters or alternatively oligomeric aliphatic esters or alkyl ether esters.

In addition to the elastomeric material, the thermoplastic polymeric material, high temperature processing aid and curative, the processable rubber compositions of this invention may include other additives such as stabilizers, fillers, curing accelerators, pigments, adhesives, tackifiers, waxes, and mixtures thereof. These additives may be added to the composition at various times, and may also be pre-mixed as a curative package. As used herein, a curative package may include any combination of additives as known in the art, or could simply only contain curing agent. The properties of the compositions and articles of the invention may be modified, either before or after vulcanization, by the addition of ingredients that are conventional in the compounding of rubber, thermoplastics, and blends thereof.

Acid acceptor compounds are commonly used as curing accelerators or curing stabilizers. Preferred acid acceptor compounds include oxides and hydroxides of divalent metals. Non-limiting examples include Ca(OH)2, MgO, CaO, and ZnO.

Non-limiting examples of fillers include both organic and inorganic fillers such as, barium sulfate, zinc sulfide, carbon black, silica, titanium dioxide, clay, talc, fiber glass, fumed silica and discontinuous fibers such as mineral fibers, wood cellulose fibers, carbon fiber, boron fiber, and aramid fiber. The addition of carbon black, extender oil, or both, preferably prior to dynamic vulcanization, is particularly preferred. Non-limiting examples of carbon black fillers include SAF black, HAF black, SRP black and Austin black. Carbon black improves the tensile strength, and an extender oil can improve processability, the resistance to oil swell, heat stability, hysteresis, cost, and permanent set. In a preferred embodiment, fillers such as carboxy block may make up to about 40% by weight of the total weight of the compositions of the invention. Preferably, the compositions comprise 1-40 weight % of filler. In other embodiments, the filler makes up 10 to 25 weight % of the compositions.

In preferred embodiments, the compositions contain about 35% by weight or more, and preferably about 40% by weight or more of the elastomer phase, based on the total weight of elastomer and thermoplastic material. In other embodiments, the compositions contain about 50% by weight or more of the elastomer phase. In preferred embodiments, the compositions further contain between about 0.1% to about 5% by weight high temperature processing aid, preferably between about 0.1 % to about 2% by weight, based on the total weight of the vulcanized elastomeric material, thermoplastic material and high temperature processing aid combined.

The compositions are homogenous blends of two phases that are sufficiently compatible that the compositions may readily be formed into shaped articles having sufficient elastomer properties, such as tensile strength, modulus, elongation at break, and compression set to be industrially useful as seals, gaskets, O-rings, hoses, and the like. In one aspect, the rubber compositions are made of two-phases where the matrix forms a continuous phase, the vulcanized elastomeric material is in the form of particles forming a non-continuous, disperse, or discrete phase. In another aspect, the elastomeric material and the matrix form co-continuous phases. The elastomer phase may be present in the form of particles in a continuous thermoplastic phase, as a 3-D network forming a co-continuous phase with the thermoplastic material, or as a mixture of both. The particles or 3-D network of the elastomer phase preferably have minimum dimensions of 10 µm or less, and more preferably 1 µm or less.

In particular embodiments, shaped articles made from the processable compositions typically exhibit a Shore A hardness of about 50 or more, preferably about 70 or more, typically in the range of from about 70 to about 90. In addition or alternatively, the tensile strength of the shaped articles will preferably be about 4 MPa or greater, preferably about 8 MPa or greater, typically about from about 8-13 MPa. In still other embodiments, shaped articles may be characterized as having a modulus at 100% of at least 2 MPa, preferably at least about 4 MPa, and typically in the range of about 4 to about 8 MPa. In other embodiments, elongation at break of articles made from the processable compositions of the invention will be about 10% or greater, preferably at least about 50%, more preferably at least about 150%, and typically in the range of from about 150 to about 300 %. Shaped articles of the invention may be characterized as having at least one of hardness, tensile strength, modulus, and elongation at break in the above noted ranges.

### Methods of Manufacture:

The rubber composition of the invention may be made by dynamic vulcanization of a fluorocarbon elastomer in the presence of a thermoplastic component and high temperature processing aid. In this embodiment, a method is provided for making the rubber composition, comprising combining a curative agent, an elastomeric material, a high temperature processing aid and a thermoplastic material to form a mixture. The mixture is heated at a temperature and for a time sufficient to effect vulcanization or cure of the fluorocarbon elastomer in the presence of the high temperature processing aid and thermoplastic material. Mechanical energy is applied to the mixture of elastomeric material, curative agent, high temperature processing aid and thermoplastic material during the heating step. Thus the method of the invention provides for mixing the elastomer, high temperature processing aid, and thermoplastic components in the presence of a curative agent and heating during the mixing to effect cure of the elastomeric component. Alternatively, the elastomeric material and thermoplastic material may be mixed for a time and at a shear rate sufficient to form a dispersion of the elastomeric material in a continuous or co-continuous thermoplastic phase. Thereafter, a high temperature processing aid and curative agent may be added to the dispersion of elastomeric material and thermoplastic material while continuing the mixing. Finally, the dispersion is heated while continuing to mix to produce the processable rubber composition of the invention.

The compositions of the invention are readily processable by conventional plastic processing techniques. In another embodiment, shaped articles, or formed compositions, are provided comprising the cured fluorocarbon elastomers dispersed in a thermoplastic matrix. Shaped articles of the invention include, without limitation, seals, O-rings, gaskets, and hoses.

In a preferred embodiment, shaped articles prepared from the compositions of the invention exhibit an advantageous set of physical properties that includes minimal surface roughness and porosity, and a high degree of resistance to the effects of chemical solvents. In these embodiments, it is possible to provide articles for which the hardness, tensile strength, and/or the elongation at break change very little or change significantly less than comparable cured fluorocarbon elastomers or other known thermoplastic vulcanizates, when the articles are exposed for extended periods of time such as by immersion or partial immersion in organic solvents or fuels.

The fluorocarbon elastomer undergoes dynamic vulcanization in the presence of thermoplastic non-curing polymers to provide compositions with desirable rubber-like properties, but that can be thermally processed by conventional thermoplastic methods such as extrusion, blow molding, and injection molding. The elastomers are generally synthetic, non-crystalline polymers that exhibit rubber-like properties when crosslinked, cured, or vulcanized. As such, the cured elastomers, as well as the compositions of the invention made by dynamic vulcanization of the elastomers, are observed to substantially recover their original shape after removal of a deforming force, and show reversible elasticity up to high strain levels.

The vulcanized elastomeric material, also referred to herein generically as a "rubber", is generally present as small particles within a continuous thermoplastic polymer matrix. A co-continuous morphology is also possible depending on the amount of elastomeric material relative to the thermoplastic material, any filler, the cure system, and the mechanism and degree of cure of the elastomer and the amount and degree of mixing. Preferably, the elastomeric material is fully crosslinked/cured.

Full crosslinking can be achieved by adding an appropriate curative or curative system to a blend of thermoplastic material and elastomeric material, and vulcanizing or curing the rubber to the desired degree under vulcanizing conditions. In a preferred embodiment, the elastomer is crosslinked by the process of dynamic vulcanization. The term dynamic vulcanization refers to a vulcanization or curing process for a rubber (here a fluorocarbon elastomer) contained in a thermoplastic composition, wherein the curable rubber is vulcanized under conditions of sufficiently high shear at a temperature above the melting point of the thermoplastic component. The rubber is thus simultaneously crosslinked and dispersed within the thermoplastic matrix. Dynamic vulcanization is effected by applying mechanical energy to mix the elastomeric and thermoplastic components at elevated temperature in the presence of a curative in conventional mixing equipment such as roll mills, Moriyama mixers, Banbury mixers, Brabender mixers, continuous mixers, mixing extruders such as single and twin-screw extruders, and the like. An advantageous characteristic of dynamically cured compositions is that, notwithstanding the fact that the elastomeric component is fully cured, the compositions can be processed and reprocessed by conventional plastic processing techniques such as extrusion, injection molding and compression molding. Scrap or flashing can be salvaged and reprocessed.

Heating and mixing or mastication at vulcanization temperatures are generally adequate to complete the vulcanization reaction in a few minutes or less, but if shorter vulcanization times are desired, higher temperatures and/or higher shear may be used. A suitable range of vulcanization temperature is from about the melting temperature of the thermoplastic material (typically about 120°C) to about 300°C or more. Typically, the range is from about 150°C to about 250°C A preferred range of vulcanization temperatures is from about 180°C to about 220°C. It is preferred that mixing continue without interruption until vulcanization occurs or is complete.

If appreciable curing is allowed after mixing has stopped, an unprocessable thermoplastic vulcanizate may be obtained. In this case, a kind of post curing step may be carried out to complete the curing process. In some embodiments, the post curing takes the form of continuing to mix the elastomer and thermoplastic during a cool-down period.

After dynamic vulcanization, a homogeneous mixture is obtained, wherein the rubber is in the form of small dispersed particles essentially of an average particle size smaller than about 50 µm, preferably of an average particle size smaller than about 25 µm. More typically and preferably, the particles have an average size of about 10 µm or less, preferably about 5 µm or less, and more preferably about 1 µm or less. In other embodiments, even when the average particle size is larger, there will be a significant number of cured elastomer particles less than 1 µm in size dispersed in the thermoplastic matrix.

The size of the particles referred to above may be equated to the diameter of spherical particles, or to the diameter of a sphere of equivalent volume. It is to be understood that not all particles will be spherical. Some particles will be fairly isotropic so that a size approximating a sphere diameter may be readily determined. Other particles may be anisotropic in that one or two dimensions may be longer than another dimension. In such cases, the preferred particle sizes referred to above correspond to the shortest of the dimensions of the particles.

In some embodiments, the cured elastomeric material is in the form of particles forming a dispersed, discrete, or non-continuous phase wherein the particles are separated from one another by the continuous phase made up of the thermoplastic matrix. Such structures are expected to be more favored at relatively lower loadings of cured elastomer, i.e. where the thermoplastic material takes up a relatively higher volume of the compositions. In other embodiments, the cured material may be in the form of a co-continuous phase with the thermoplastic material. Such structures are believed to be favored at relatively higher volume of the cured elastomer. At intermediate elastomer loadings, the structure of the two-phase compositions may take on an intermediate state in that some of the cured elastomer may be in the form of discrete particles and some may be in the form of a co-continuous phase.

The homogenous nature of the compositions, the small particle size indicative of a large surface area of contact between the phases, and the ability of the compositions to be formed into shaped articles having sufficient hardness, tensile strength, modulus, elongation at break, or compression set to be useful in industrial applications, indicate a relatively high degree of compatibility between the elastomer and thermoplastic phases. During the process, the elastomeric particles are being crosslinked or cured while the two phases are being actively mixed and combined. In addition, the higher temperature and the presence of reactive crosslinking agent may lead to some physical or covalent linkages between the two phases. At the same time, the process leads to a finer dispersion of the discrete or co-continuous elastomer phase in the thermoplastic than is possible with simple filling.

The progress of the vulcanization may be followed by monitoring mixing torque or mixing energy requirements during mixing. The mixing torque or mixing energy curve generally goes through a maximum after which mixing can be continued somewhat longer to improve the fabricability of the blend. If desired, one can add additional ingredients, such as the stabilizer package, after the dynamic vulcanization is complete. The stabilizer package is preferably added to the thermoplastic vulcanizate after vulcanization has been essentially completed, i.e., the curative has been essentially consumed.

The processable rubber compositions of the present invention may be manufactured in a batch process or a continuous process.

In a batch process, predetermined charges of elastomeric material, thermoplastic material, high temperature processing aid and curative agents, or curative package, are added to a mixing apparatus. In a typical batch procedure, the elastomeric material and thermoplastic material are first mixed, blended, masticated or otherwise physically combined until a desired particle size of elastomeric material is provided in a continuous phase of thermoplastic material. When the structure of the elastomeric material is as desired, a high temperature processing aid and curative agent may be added while continuing to apply mechanical energy to mix the elastomeric material and thermoplastic material. Curing is effected by heating or continuing to heat the mixing combination of thermoplastic and elastomeric material in the presence of the curative agent. When cure is complete, the processable rubber composition may be removed from the reaction vessel (mixing chamber) for further processing.

It is preferred to mix the elastomeric material and thermoplastic material at a temperature where the thermoplastic material softens and flows. If such a temperature is below that at which the curative agent is activated, the curative agent may be a part of the mixture during the initial particle dispersion step of the batch process. In some embodiments, a curative is combined with the elastomeric and polymeric material at a temperature below the curing temperature. When the desired dispersion is achieved, the high temperature processing aid can be added, along with any desired filler material, and the temperature may be increased to effect cure. In one embodiment, commercially available elastomeric materials are used that contain a curative pre-formulated into the elastomer. However, if the curative agent is activated at the temperature of initial mixing, it is preferred to leave out the curative until the desired particle size distribution of the elastomeric material in the thermoplastic matrix is achieved. In another embodiment, curative is added after the elastomeric and thermoplastic material are mixed. In a preferred embodiment, the curative agent is added to a mixture of elastomeric particles in thermoplastic material while the entire mixture continues to be mechanically stirred, agitated or otherwise mixed.

Continuous processes may also be used to prepare the processable rubber compositions of the invention having high temperature processing aid. In a preferred embodiment, a twin screw extruder apparatus, either co-rotation or counter-rotation screw type, is provided with ports for material addition and reaction chambers made up of modular components of the twin screw apparatus. In a typical continuous procedure, thermoplastic material and elastomeric material are combined by inserting them into the screw extruder together from a first hopper using a feeder (loss-in-weight or volumetric feeder). Temperature and screw parameters may be adjusted to provide a proper temperature and shear to effect the desired mixing and particle size distribution of an uncured elastomeric component in a thermoplastic material matrix. The duration of mixing may be controlled by providing a longer or shorter length of extrusion apparatus or by controlling the speed of screw rotation for the mixture of elastomeric material and thermoplastic material to go through during the mixing phase. The degree of mixing may also be controlled by the mixing screw element configuration in the screw shaft, such as intensive, medium or mild screw designs. Then, at a downstream port, by using side feeder (loss-in-weight or volumetric feeder), the high temperature processing aid and curative agent, or curative package, may be added continuously to the mixture of thermoplastic material and elastomeric material as it continues to travel down the twin screw extrusion pathway. Downstream of the curative additive port, the mixing parameters and transit time may be varied as described above. The addition of any filler, especially fiber filler, is preferred at the downstream feeding section to minimize the breakage of fibers during the high shearing mixing action of the twin-screw extrusion. By adjusting the shear rate, temperature, duration of mixing, mixing screw element configuration, as well as the time of adding the curative agent, or curative package, processable rubber compositions of the invention may be made in a continuous process. As in the batch process, the elastomeric material may be commercially formulated to contain a curative agent, generally a phenol or phenol resin curative.

The compositions and articles of the invention will contain a sufficient amount of vulcanized elastomeric material ("rubber") to form a rubbery composition of matter, that is, they will exhibit a desirable combination of flexibility, softness, and compression set. Preferably, the compositions should comprise at least about 25 parts by weight rubber, preferably at least about 35 parts by weight rubber, more preferably at least about 40 parts by weight rubber, even more preferably at least about 45 parts by weight rubber, and still more preferably at least about 50 parts by weight rubber per 100 parts by weight of the rubber and thermoplastic polymer combined. The amount of cured rubber within the thermoplastic vulcanizate is generally from about 5 to about 95 percent by weight, preferably from about 35 to about 95 percent by weight, more preferably from about 40 to about 90 weight percent, and more preferably from about 50 to about 80 percent by weight of the total weight of the rubber and the thermoplastic polymer combined.

The amount of thermoplastic polymer within the processable rubber compositions of the invention is generally from about 5 to about 95 percent by weight, preferably from about 10 to about 65 percent by weight and more preferably from about 20 to about 50 percent by weight of the total weight of the rubber and the thermoplastic combined.

As noted above, the processable rubber compositions and shaped articles of the invention include a cured rubber, a high temperature processing aid and a thermoplastic polymer. Preferably, the thermoplastic vulcanizate is a homogeneous mixture wherein the rubber is in the form of finely-divided and well-dispersed rubber particles within a non-vulcanized matrix. It should be understood, however, that the thermoplastic vulcanizates of the this invention are not limited to those containing discrete phases inasmuch as the compositions of this invention may also include other morphologies such as co-continuous morphologies. In especially preferred embodiments, the rubber particles have an average particle size smaller than about 50 µm, more preferably smaller than about 25 µm, even more preferably smaller than about 10 µm or less, and still more preferably smaller than about 5 µm.

Advantageously, the shaped articles of the invention are rubber-like materials that, unlike conventional rubbers, can be processed and recycled like thermoplastic materials. These materials are rubber like to the extent that they will retract to less than 1.5 times their original length within one minute after being stretched at room temperature to twice its original length and held for one minute before release, as defined in ASTM D1566. Also, these materials satisfy the tensile set requirements set forth in ASTM D412, and they also satisfy the elastic requirements for compression set per ASTM D395.

The reprocessability of the rubber compositions of the invention may be exploited to provide a method for reducing the costs of a manufacturing process for making shaped rubber articles. The method involves recycling scrap generated during the manufacturing process to make other new shaped articles. Because the compositions of the invention and the shaped articles made from the compositions are thermally processable, scrap may readily be recycled for re-use by collecting the scrap, optionally cutting, shredding, grinding, milling, otherwise comminuting the scrap material, and re-processing the material by conventional thermoplastic techniques. Techniques for forming shaped articles from the recovered scrap material are in general the same as those used to form the shaped articles - the conventional thermoplastic techniques include, without limitation, blow molding, injection molding, compression molding, and extrusion.

The re-use of the scrap material reduces the costs of the manufacturing process by reducing the material cost of the method. Scrap may be generated in a variety of ways during a manufacturing process for making shaped rubber articles. For example, off-spec materials may be produced. Even when on-spec materials are produced, manufacturing processes for shaped rubber articles tend to produce waste, either through inadvertence or through process design, such as the material in sprues of injection molded parts. The re-use of such materials through recycling reduces the material and thus the overall costs of the manufacturing process.

For thermoset rubbers, such off spec materials usually can not be recycled into making more shaped articles, because the material can not be readily re-processed by the same techniques as were used to form the shaped articles in the first place. Recycling efforts in the case of thermoset rubbers are usually limited to grinding up the scrap and the using the grinds as raw material in a number products other than those produced by thermoplastic processing technique

The present invention is further illustrated through the following non-limiting examples.

### EXAMPLES

In Examples 1-19, the following materials are used:

Dyneon FE 5840 is a terpolymer elastomer of VDF/HFP/TFE, from Dyneon (3M).

Dyneon BRE 7231 X is a base resistant elastomer, based on a terpolymer of TFE, propylene, and VDF, commercially available from Dyneon (3M).

Dyneon THV 815X is a fluorothermoplastic polymer of tetrafluoroethylene, hexafluoropropylene and vinylidene fluoride from Dyneon (3M).

Hylar MP-10 is a high performance melt-processable polyvinylidene fluoride homopolymer.

Rhenofit CF is a calcium hydroxide crosslinker for fluoroelastomers, from Rhein Chemie.

Elastomag 170 is a high activity powdered magnesium oxide from Rohm and Haas.

Struktol WS-280 is a silane coupling agent from Struktol.

Struktol TR-065 is a blend of medium molecular weight resins available from Struktol.

Tecnoflon FPA-1 is a functionalized perfluoropolyether in wax form from Ausimont.

Viton F605C is a VDF/HFP/TFE terpolymer elastomer from DuPont Dow Elastomers.
[0100] Genestar PA9T is C9 diamine based aromatic polyamide. It is a high temperature polyamide based on a copolymer of terephthalic acid and nonanediamine, commercially available from Kuraray.

MT Black (N990) is carbon black.

Nafol 1822-B is a solid blend mixture of 1-Octadecan / 1-Eicosan / 1- Docosan.

Halar 500 LC is a partially fluorinated semi-crystalline copolymer of ethylene and chlorotrifluoroethylene from Solvay Solexis.

Austin Black is carbon black.

Examples 1-19 demonstrate dynamic vulcanization of copolymers of tetrafluoroethylene and propylene in the presence of a variety of thermoplastic elastomers, semicrystalline thermoplastic materials, and high temperature processing aids. Examples 1-12 use various grades of Dyneon elastomer. Viton elastomer is used in examples 13-19. Examples 1-10 and 13-19 are carried out in a Brabender mixer, while examples 11-12 are carried out in a Moriyama mixer. The Dyneon and Viton materials are used at a level of 100 parts, and the thermoplastic materials are used at levels between 25 parts per hundred Dyneon or Viton to 200 parts per hundred parts of the Dyneon or Viton material. For example, 100 pphr would represent an equal amount of material and fluoroelastomer.

To demonstrate a batch process, the ingredients are mixed in an appropriate mixer according to the following procedure. The thermoplastic material is melted in the mixer and stirred. To the molten stirring thermoplastic material is added the Dyneon or Viton, along with the carbon black. Mixing continues at the melting point of the thermoplastic material for a further 10-20 minutes, preferably at a temperature of about 120-180°C. Then, the high temperature processing aid and curing accelerators are added and the mixing and heating continued for a further 10 minutes. The vulcanized material is cooled down and removed from the mixer. Shaped articles may be prepared from the vulcanized composition by conventional compression molding, injection molding, extrusion, and the like. Plaques may be fabricated from the vulcanized composition for measurement of physical properties.

| **Ingredient** | **Example 1a** | | **Example 1b** | | **Example 1c** | | **Example 1d** | | **Example 1e** | |
|---|---|---|---|---|---|---|---|---|---|---|
| | **pphr** | **g** | **pphr** | **g** | **pphr** | **g** | **pphr** | **g** | **Pphr** | **g** |
| Dyneon FE5840 | 70.0 | **185.3** | 70.0 | **158.2** | 70.0 | **122.4** | 70.0 | **99.8** | 70.0 | **84.3** |
| Dyneon BRE 7231X | 30.0 | **79.4** | 30.0 | **67.8** | 30.0 | **52.5** | 30.0 | **42.8** | 30.0 | **36.1** |
| Hylar MP-10 | 25.0 | **66.2** | 50.0 | **113.0** | 100.0 | **174.9** | 150.0 | **213.9** | 200.0 | **240.8** |
| Rhenofit CF | 6.0 | **15.9** | 6.0 | **13.6** | 6.0 | **10.5** | 6.0 | **8.6** | 6.0 | **7.2** |
| Elastomag 170 | 3.0 | **7.9** | 3.0 | **6.8** | 3.0 | **5.2** | 3.0 | **4.3** | 3.0 | 3.6 |
| Struktol WS-280 | 1.0 | **2.6** | 1.0 | **2.3** | 1.0 | **1.7** | 1.0 | **1.4** | 1.0 | **1.2** |
| Austin Black | 10.00 | **26.5** | 10.00 | **22.6** | 10.00 | **17.5** | 10.00 | **14.3** | 10.00 | **12.0** |
| Tecnoflon FPA-1 | 1.00 | **2.6** | 1.00 | **2.3** | 1.00 | **1.7** | 1.00 | **1.4** | 1.00 | **1.2** |

| **Ingredient** | **Example 2a** | | **Example 2b** | | **Example 2c** | | **Example 2d** | | **Example 2e** | |
|---|---|---|---|---|---|---|---|---|---|---|
| | **pphr** | **g** | **pphr** | **g** | **pphr** | **g** | **pphr** | **g** | **Pphr** | **g** |
| Dyneon FE5840 | 70.0 | **185.3** | 70.0 | **158.2** | 70.0 | **122.4** | 70.0 | **99.8** | 70.0 | **84.3** |
| Dyneon BRE 7231X | 30.0 | **79.4** | 30.0 | **67.8** | 30.0 | **52.5** | 30.0 | **42.8** | 30.0 | **36.1** |
| Hylar MP-10 | 25.0 | **66.2** | 50.0 | **113.0** | 100.0 | **174.9** | 150.0 | **213.9** | 200.0 | **240.8** |
| Rhenofit CF | 6.0 | **15.9** | 6.0 | **13.6** | 6.0 | **10.5** | 6.0 | **8.6** | 6.0 | **7.2** |
| Elastomag 170 | 3.0 | **7.9** | 3.0 | **6.8** | 3.0 | **5.2** | 3.0 | **4.3** | 3.0 | **3.6** |
| Struktol WS-280 | 1.0 | **2.6** | 1.0 | **2.3** | 1.0 | **1.7** | 1.0 | **1.4** | 1.0 | **1.2** |
| Austin Black | 10.00 | **26.5** | 10.00 | **22.6** | 10.00 | **17.5** | 10.00 | **14.3** | 10.00 | **12.0** |
| Nafol 1822-B | 1.00 | **2.6** | 1.00 | **2.3** | 1.00 | **1.7** | 1.00 | **1.4** | 1.00 | **1.2** |

| **Ingredient** | **Example 3a** | | **Example 3b** | | **Example 3c** | | **Example 3d** | | **Example 3e** | |
|---|---|---|---|---|---|---|---|---|---|---|
| | **pphr** | **g** | **pphr** | **g** | **pphr** | **g** | **pphr** | **g** | **Pphr** | **g** |
| Dyneon FE5840 | 70.0 | **185.3** | 70.0 | **158.2** | 70.0 | **122.4** | 70.0 | **99.8** | 70.0 | **84.3** |
| Dyneon BRE | 30.0 | **79.4** | 30.0 | **67.8** | 30.0 | **52.5** | 30.0 | **42.8** | 30.0 | **36.1** |
| 7231 X | | | | | | | | | | |
| Hylar MP-10 | 25.0 | **66.2** | 50.0 | **113.0** | 100.0 | **174.9** | 150.0 | **213.9** | 200.0 | **240.8** |
| Rhenofit CF | 6.0 | **15.9** | 6.0 | **13.6** | 6.0 | **10.5** | 6.0 | **8.6** | 6.0 | **7.2** |
| Elastomag 170 | 3.0 | **7.9** | 3.0 | **6.8** | 3.0 | **5.2** | 3.0 | **4.3** | 3.0 | **3.6** |
| Struktol WS-280 | 1.0 | **2.6** | 1.0 | **2.3** | 1.0 | **1.7** | 1.0 | **1.4** | 1.0 | **1.2** |
| Austin Black | 10.00 | **26.5** | 10.00 | **22.6** | 10.00 | **17.5** | 10.00 | **14.3** | 10.00 | **12.0** |
| Nafol 1822-C | 1.00 | **2.6** | 1.00 | **2.3** | 1.00 | **1.7** | 1.00 | **1.4** | 1.00 | **1.2** |

| **Ingredient** | **Example 4a** | | **Example 4b** | | **Example 4c** | | **Example 4d** | | **Example 4e** | |
|---|---|---|---|---|---|---|---|---|---|---|
| | **pphr** | **g** | **pphr** | **g** | **pphr** | **g** | **pphr** | **g** | **Pphr** | **g** |
| Dyneon FE5840 | 70.0 | **185.3** | 70.0 | **158.2** | 70.0 | **122.4** | 70.0 | **99.8** | 70.0 | **84.3** |
| Dyneon BRE 7231X | 30.0 | **79.4** | 30.0 | **67.8** | 30.0 | **52.5** | 30.0 | **42.8** | 30.0 | **36.1** |
| Hylar MP-10 | 25.0 | **66.2** | 50.0 | **113.0** | 100.0 | **174.9** | 150.0 | **213.9** | 200.0 | **240.8** |
| Rhenofit CF | 6.0 | **15.9** | 6.0 | **13.6** | 6.0 | **10.5** | 6.0 | **8.6** | 6.0 | **7.2** |
| Elastomag 170 | 3.0 | **7.9** | 3.0 | **6.8** | 3.0 | **5.2** | 3.0 | **4.3** | 3.0 | **3.6** |
| Struktol TR-065 | 2.0 | **5.3** | 2.0 | **4.5** | 2.0 | **3.5** | 2.0 | **2.9** | 2.0 | **2.4** |
| Austin Black | 10.00 | **26.5** | 10.00 | **22.6** | 10.00 | **17.5** | 10.00 | **14.3** | 10.00 | **12.0** |

| **Ingredient** | **Example 5a** | | **Example 5b** | |
|---|---|---|---|---|
| | **pphr** | **g** | **pphr** | **g** |
| Dyneon FE5840 | 70.0 | **2612.0** | 70.0 | **2227.9** |
| Dyneon BRE 7231X | 30.0 | **1119.4** | 30.0 | **954.8** |
| Dyneon THV 815X | 25.0 | **932.8** | 50.0 | **1591.3** |
| Austin Black | 10.0 | **373.1** | 10.0 | **318.3** |
| Rhenofit CF | 6.0 | **223.9** | 6.0 | **191.0** |
| Elastomag 170 | 3.0 | **111.9** | 3.0 | **95.5** |
| Struktol WS-280 | 0.5 | **18.7** | 0.5 | **15.9** |
| Tecnoflon FPA-1 | 0.50 | **18.7** | 0.50 | **15.9** |

| **Ingredient** | **Example 6a** | | **Example 6b** | | **Example 6c** | | **Example 6d** | | **Example 6e** | |
|---|---|---|---|---|---|---|---|---|---|---|
| | **pphr** | **g** | **pphr** | **g** | **pphr** | **g** | **pphr** | **g** | **Pphr** | **g** |
| | | | | | | | | | | |
| Dyneon FE5840 | 70.0 | **185.3** | 70.0 | **158.2** | 70.0 | **122.4** | 70.0 | **99.8** | 70.0 | **84.3** |
| Dyneon BRE 7231X | 30.0 | **79.4** | 30.0 | **67.8** | 30.0 | **52.5** | 30.0 | **42.8** | 30.0 | **36.1** |
| Halar 500LC | 25.0 | **66.2** | 50.0 | **113.0** | 100.0 | **174.9** | 150.0 | **213.9** | 200.0 | **240.8** |
| Rhenofit CF | 6.0 | **15.9** | 6.0 | **13.6** | 6.0 | **10.5** | 6.0 | **8.6** | 6.0 | **7.2** |
| Elastomag 170 | 3.0 | **7.9** | 3.0 | **6.8** | 3.0 | **5.2** | 3.0 | **4.3** | 3.0 | **3.6** |
| Struktol WS-280 | 1.0 | **2.6** | 1.0 | **2.3** | 1.0 | **1.7** | 1.0 | **1.4** | 1.0 | **1.2** |
| Austin Black | 10.00 | **26.5** | 10.00 | **22.6** | 10.00 | **17.5** | 10.00 | **14.3** | 10.00 | **12.0** |
| Tecnoflon FPA-1 | 1.00 | **2.6** | 1.00 | **2.3** | 1.00 | **1.7** | 1.00 | **1.4** | 1.00 | **1.2** |

| **Ingredient** | **Example 7a** | | **Example 7b** | | **Example 7c** | | **Example 7d** | | **Example 7e** | |
|---|---|---|---|---|---|---|---|---|---|---|
| | **pphr** | **g** | **pphr** | **g** | **pphr** | **g** | **pphr** | **g** | **Pphr** | **g** |
| Dyneon FE5840 | 70.0 | **185.3** | 70.0 | **158.2** | 70.0 | **122.4** | 70.0 | **99.8** | 70.0 | **84.3** |
| Dyneon BRE 7231 X | 30.0 | **79.4** | 30.0 | **67.8** | 30.0 | **52.5** | 30.0 | **42.8** | 30.0 | **36.1** |
| Genestar PA9T | 25.0 | **66.2** | 50.0 | **113.0** | 100.0 | **174.9** | 150.0 | **213.9** | 200.0 | **240.8** |
| Rhenofit CF | 6.0 | **15.9** | 6.0 | **13.6** | 6.0 | **10.5** | 6.0 | **8.6** | 6.0 | **7.2** |
| Elastomag 170 | 3.0 | **7.9** | 3.0 | **6.8** | 3.0 | **5.2** | 3.0 | **4.3** | 3.0 | **3.6** |
| Struktol WS-280 | 1.0 | **2.6** | 1.0 | **2.3** | 1.0 | **1.7** | 1.0 | **1.4** | 1.0 | **1.2** |
| Austin Black | 10.00 | **26.5** | 10.00 | **22.6** | 10.00 | **17.5** | 10.00 | **14.3** | 10.00 | **12.0** |
| Tecnoflon FPA-1 | 1.00 | **2.6** | 1.00 | **2.3** | 1.00 | **1.7** | 1.00 | **1.4** | 1.00 | **1.2** |

| **Ingredient** | **Example 8a** | | **Example 8b** | | **Example 8c** | | **Example 8d** | | **Example 8e** | |
|---|---|---|---|---|---|---|---|---|---|---|
| | **pphr** | **g** | **pphr** | **g** | **pphr** | **g** | **pphr** | **g** | **Pphr** | **g** |
| Dyneon FE5840 | 70.0 | **198.9** | 70.0 | **168.0** | 70.0 | **128.2** | 70.0 | **103.6** | 70.0 | **87.0** |
| Dyneon BRE 7231X | 30.0 | **85.2** | 30.0 | **72.0** | 30.0 | **54.9** | 30.0 | **44.4** | 30.0 | **37.3** |
| Dyneon THV 815X | 25.0 | **71.0** | 50.0 | **120.0** | 100.0 | **183.2** | 150.0 | **222.1** | 200.0 | **248.5** |
| Rhenofit CF | 6.0 | **17.0** | 6.0 | **14.4** | 6.0 | **11.0** | 6.0 | **8.9** | 6.0 | 7.5 |
| Elastomag 170 | 3.0 | **8.5** | 3.0 | **7.2** | 3.0 | **5.5** | 3.0 | **4.4** | 3.0 | 3.7 |
| Struktol WS-280 | 1.0 | **2.8** | 1.0 | **2.4** | 1.0 | **1.8** | 1.0 | **1.5** | 1.0 | 1.2 |
| Tecnoflon FPA-1 | 1.00 | **2.8** | 1.00 | **2.4** | 1.00 | **1.8** | 1.00 | **1.5** | 1.00 | 1.2 |

| **Ingredient** | **Example 9a** | | **Example 9b** | | **Example 9c** | | **Example 9d** | | **Example 9e** | |
|---|---|---|---|---|---|---|---|---|---|---|
| | **pphr** | **g** | **pphr** | **g** | **pphr** | **g** | **pphr** | **g** | **Pphr** | **g** |
| Dyneon FE5840 | 70.0 | **198.9** | 70.0 | **168.0** | 70.0 | **128.2** | 70.0 | **103.6** | 70.0 | **87.0** |
| Dyneon BRE 7231X | 30.0 | **85.2** | 30.0 | **72.0** | 30.0 | **54.9** | 30.0 | **44.4** | 30.0 | **37.3** |
| Hylar MP-10 | 25.0 | **71.0** | 50.0 | **120.0** | 100.0 | **183.2** | 150.0 | **222.1** | 200.0 | **248.5** |
| Rhenofit CF | 6.0 | **17.0** | 6.0 | **14.4** | 6.0 | **11.0** | 6.0 | **8.9** | 6.0 | **7.5** |
| Elastomag 170 | 3.0 | **8.5** | 3.0 | **7.2** | 3.0 | **5.5** | 3.0 | **4.4** | 3.0 | **3.7** |
| Struktol WS-280 | 1.0 | **2.8** | 1.0 | **2.4** | 1.0 | **1.8** | 1.0 | **1.5** | 1.0 | **1.2** |
| Tecnoflon FPA-1 | 1.00 | **2.8** | 1.00 | **2.4** | 1.00 | **1.8** | 1.00 | **1.5** | 1.00 | **1.2** |

| **Ingredient** | **Example 10a** | | **Example 10b** | | **Example 10c** | | **Example 10d** | | **Example 10e** | |
|---|---|---|---|---|---|---|---|---|---|---|
| | **pphr** | **g** | **pphr** | **g** | **pphr** | **g** | **pphr** | **g** | **Pphr** | **g** |
| Dyneon FE5840 | 70.0 | **198.9** | 70.0 | **168.0** | 70.0 | **128.2** | 70.0 | **103.6** | 70.0 | **87.0** |
| Dyneon BRE 7231X | 30.0 | **85.2** | 30.0 | **72.0** | 30.0 | **54.9** | 30.0 | **44.4** | 30.0 | **37.3** |
| Halar 500 LC | 25.0 | **71.0** | 50.0 | **120.0** | 100.0 | **183.2** | 150.0 | **222.1** | 200.0 | **248.5** |
| Rhenofit CF | 6.0 | **17.0** | 6.0 | **14.4** | 6.0 | **11.0** | 6.0 | **8.9** | 6.0 | **7.5** |
| Elastomag 170 | 3.0 | **8.5** | 3.0 | **7.2** | 3.0 | **5.5** | 3.0 | **4.4** | 3.0 | **3.7** |
| Struktol WS-280 | 1.0 | **2.8** | 1.0 | **2.4** | 1.0 | **1.8** | 1.0 | **1.5** | 1.0 | **1.2** |
| Tecnoflon FPA-1 | 1.00 | **2.8** | 1.00 | **2.4** | 1.00 | **1.8** | 1.00 | **1.5** | 1.00 | **1.2** |

| **Ingredient** | **Example 11a** | | **Example 11b** | |
|---|---|---|---|---|
| | **pphr** | **g** | **pphr** | **g** |
| Dyneon FE5840 | 70.0 | **2594.1** | 70.0 | **2630.1** |
| Dyneon BRE 7231 X | 30.0 | **1111.8** | 30.0 | **1127.2** |
| Hylar MP-10 | 25.0 | **926.5** | 25.0 | **939.3** |
| Rhenofit CF | 6.0 | **222.4** | 6.0 | **225.4** |
| Elastomag 170 | 3.0 | **111.2** | 3.0 | **112.7** |
| Struktol WS-280 | 1.0 | **37.1** | | |
| Austin Black | 10.00 | **370.6** | 10.00 | **375.7** |
| Tecnoflon FPA-1 | 1.00 | **37.1** | | |

| **Ingredient** | **Example 12a** | | **Example 12b** | |
|---|---|---|---|---|
| | **pphr** | **g** | **pphr** | **g** |
| Dyneon FE5840 | 70.0 | **2594.1** | 70.0 | **2630.1** |
| Dyneon BRE 7231X | 30.0 | **1111.8** | 30.0 | **1127.2** |
| Halar 500 LC | 25.0 | **926.5** | 25.0 | **939.3** |
| Rhenofit CF | 6.0 | **222.4** | 6.0 | **225.4** |
| Elastomag 170 | 3.0 | **111.2** | 3.0 | **112.7** |
| Struktol WS-280 | 1.0 | **37.1** | | |
| Austin Black | 10.00 | **370.6** | 10.00 | **375.7** |
| Tecnoflon FPA-1 | 1.00 | **37.1** | | |

| **Ingredient** | **Example 13a** | | **Example 13b** | | **Example 13c** | | **Example 13d** | | **Example 13e** | |
|---|---|---|---|---|---|---|---|---|---|---|
| | **pphr** | **g** | **pphr** | **g** | **pphr** | **g** | **pphr** | **g** | **pphr** | **g** |
| Viton F-605C | 100. 0 | **232. 8** | 100. 0 | **202. 3** | 100. 0 | **160. 4** | 100. 0 | **132.8** | 100.0 | **113.3** |
| Dyneon THV 815X | 25.0 | **58.2** | 50.0 | **101. 2** | 100. 0 | **160. 4** | 150. 0 | **199.2** | 200.0 | **226.7** |
| Rhenofit CF | 6.0 | **14.0** | 6.0 | **12.1** | 6.0 | **9.6** | 6.0 | **8.0** | 6.0 | **6.8** |
| Elastomag 170 | 3.0 | **7.0** | 3.0 | **6.1** | 3.0 | **4.8** | 3.0 | **4.0** | 3.0 | **3.4** |
| MT Black (N990) | 30.0 0 | **69.8** | 30.0 0 | **60.7** | 30.0 0 | **48.1** | 30.0 0 | **39.8** | 30.00 | **34.0** |
| Struktol WS-280 | 1.00 | **2.3** | 1.00 | **2.0** | 1.00 | **1.6** | 1.00 | **1.3** | 1.00 | **1.1** |
| Tecnoflon FPA-1 | 1.00 | **2.3** | 1.00 | **2.0** | 1.00 | **1.6** | 1.00 | **1.3** | 1.00 | **1.1** |

| **Ingredient** | **Example 14a** | | **Example 14b** | | **Example 14c** | | **Example 14d** | | **Example 14e** | |
|---|---|---|---|---|---|---|---|---|---|---|
| | **pphr** | **g** | **pphr** | **g** | **pphr** | **g** | **pphr** | **g** | **pphr** | **g** |
| Viton F-605C | 100.0 | **232.8** | 100.0 | **202.3** | 100.0 | **160.4** | 100.0 | **132.8** | 100.0 | **113.3** |
| Hylar MP-10 | 25.0 | **58.2** | 50.0 | **101.2** | 100.0 | **160.4** | 150.0 | **199.2** | 200.0 | **226.7** |
| Rhenofit CF | 6.0 | **14.0** | 6.0 | **12.1** | 6.0 | **9.6** | 6.0 | **8.0** | 6.0 | **6.8** |
| Elastomag 170 | 3.0 | **7.0** | 3.0 | **6.1** | 3.0 | **4.8** | 3.0 | **4.0** | 3.0 | **3.4** |
| MT Black (N990) | 30.00 | **69.8** | 30.00 | **60.7** | 30.00 | **48.1** | 30.00 | **39.8** | 30.00 | **34.0** |
| Struktol WS-280 | 1.00 | **2.3** | 1.00 | **2.0** | 1.00 | **1.6** | 1.00 | **1.3** | 1.00 | **1.1** |
| Tecnoflon FPA-1 | 1.00 | **2.3** | 1.00 | **2.0** | 1.00 | **1.6** | 1.00 | **1.3** | 1.00 | **1.1** |

| **Ingredient** | **Example 15a** | | **Example 15b** | | **Example 15c** | | **Example 15d** | | **Example 15e** | |
|---|---|---|---|---|---|---|---|---|---|---|
| | **pphr** | **g** | **pphr** | **g** | **pphr** | **g** | **pphr** | **g** | **pphr** | **g** |
| Viton F-605C | 100.0 | **232.8** | 100.0 | **202.3** | 100.0 | **160.4** | 100.0 | **132.8** | 100.0 | **113.3** |
| Halar 500 LC | 25.0 | **58.2** | 50.0 | **101.2** | 100.0 | **160.4** | 150.0 | **199.2** | 200.0 | **226.7** |
| Rhenofit CF | 6.0 | **14.0** | 6.0 | **12.1** | 6.0 | **9.6** | 6.0 | **8.0** | 6.0 | **6.8** |
| Elastomag 170 | 3.0 | **7.0** | 3.0 | **6.1** | 3.0 | **4.8** | 3.0 | **4.0** | 3.0 | **3.4** |
| MT Black (N990) | 30.00 | **69.8** | 30.00 | **60.7** | 30.00 | **48.1** | 30.00 | **39.8** | 30.00 | **34.0** |
| Struktol WS-280 | 1.00 | **2.3** | 1.00 | **2.0** | 1.00 | **1.6** | 1.00 | **1.3** | 1.00 | **1.1** |
| Tecnoflon FPA-1 | 1.00 | **2.3** | 1.00 | **2.0** | 1.00 | **1.6** | 1.00 | **1.3** | 1.00 | **1.1** |

| **Ingredient** | **Example 16a** | | **Example 16b** | | **Example 16c** | | **Example 16d** | | **Example 16e** | |
|---|---|---|---|---|---|---|---|---|---|---|
| | **pphr** | **g** | **pphr** | **g** | **pphr** | **g** | **pphr** | **g** | **pphr** | **g** |
| Viton F-605C | 100.0 | **232.8** | 100.0 | **202.3** | 100.0 | **160.4** | 100.0 | **132.8** | 100.0 | **113.3** |
| Genestar PA9T | 25.0 | **58.2** | 50.0 | **101.2** | 100.0 | **160.4** | 150.0 | **199.2** | 200.0 | **226.7** |
| Rhenofit CF | 6.0 | **14.0** | 6.0 | **12.1** | 6.0 | **9.6** | 6.0 | **8.0** | 6.0 | **6.8** |
| Elastomag 170 | 3.0 | **7.0** | 3.0 | **6.1** | 3.0 | **4.8** | 3.0 | **4.0** | 3.0 | **3.4** |
| MT Black (N990) | 30.00 | **69.8** | 30.00 | **60.7** | 30.00 | **48.1** | 30.00 | **39.8** | 30.00 | **34.0** |
| Struktol WS-280 | 1.00 | **2.3** | 1.00 | **2.0** | 1.00 | **1.6** | 1.00 | **1.3** | 1.00 | **1.1** |
| Tecnoflon FPA-1 | 1.00 | **2.3** | 1.00 | **2.0** | 1.00 | **1.6** | 1.00 | **1.3** | 1.00 | **1.1** |

| **Ingredient** | **Example 17a** | | **Example 17b** | | **Example 17c** | | **Example 17d** | | **Example 17e** | |
|---|---|---|---|---|---|---|---|---|---|---|
| | **pphr** | **g** | **pphr** | **g** | **pphr** | **g** | **pphr** | **g** | **Pphr** | **g** |
| Viton F-605C | 100.0 | **284.2** | 100.0 | **240.0** | 100.0 | **183.2** | 100.0 | **148.1** | 100.0 | **124.3** |
| Dyneon THV 815X | 25.0 | **71.0** | 50.0 | **120.0** | 100.0 | **183.2** | 150.0 | **222.1** | 200.0 | **248.5** |
| Rhenofit CF | 6.0 | **17.0** | 6.0 | **14.4** | 6.0 | **11.0** | 6.0 | **8.9** | 6.0 | **7.5** |
| Elastomag 170 | 3.0 | **8.5** | 3.0 | **7.2** | 3.0 | **5.5** | 3.0 | **4.4** | 3.0 | **3.7** |
| Struktol WS-280 | 1.00 | **2.8** | 1.00 | **2.4** | 1.00 | **1.8** | 1.00 | **1.5** | 1.00 | **1.2** |
| Tecnoflon FPA-1 | 1.00 | **2.8** | 1.00 | **2.4** | 1.00 | **1.8** | 1.00 | **1.5** | 1.00 | **1.2** |

| **Ingredient** | **Example 18a** | | **Example 18b** | | **Example 18c** | | **Example 18d** | | **Example 18e** | |
|---|---|---|---|---|---|---|---|---|---|---|
| | **pphr** | **g** | **pphr** | **g** | **pphr** | **g** | **pphr** | **g** | **pphr** | **g** |
| Viton F-605C | 100.0 | **284.2** | 100.0 | **240.0** | 100.0 | **183.2** | 100.0 | **148.1** | 100.0 | **124.3** |
| Hylar MP-10 | 25.0 | **71.0** | 50.0 | **120.0** | 100.0 | **183.2** | 150.0 | **222.1** | 200.0 | **248.5** |
| Rhenofit CF | 6.0 | **17.0** | 6.0 | **14.4** | 6.0 | **11.0** | 6.0 | **8.9** | 6.0 | **7.5** |
| Elastomag 170 | 3.0 | **8.5** | 3.0 | **7.2** | 3.0 | **5.5** | 3.0 | **4.4** | 3.0 | **3.7** |
| Struktol WS-280 | 1.00 | **2.8** | 1.00 | **2.4** | 1.00 | **1.8** | 1.00 | **1.5** | 1.00 | **1.2** |
| Tecnoflon FPA-1 | 1.00 | **2.8** | 1.00 | **2.4** | 1.00 | **1.8** | 1.00 | **1.5** | 1.00 | **1.2** |

| **Ingredient** | **Example 19a** | | **Example 19b** | | **Example 19c** | | **Example 19d** | | **Example 19e** | |
|---|---|---|---|---|---|---|---|---|---|---|
| | **Pphr** | **g** | **pphr** | **g** | **pphr** | **g** | **pphr** | **g** | **pphr** | **g** |
| Viton F-605C | 100.0 | **284.2** | 100.0 | **240.0** | 100.0 | **183.2** | 100.0 | **148.1** | 100.0 | **124.3** |
| Halar 500 LC | 25.0 | **71.0** | 50.0 | **120.0** | 100.0 | **183.2** | 150.0 | **222.1** | 200.0 | **248.5** |
| Rhenofit CF | 6.0 | **17.0** | 6.0 | **14.4** | 6.0 | **11.0** | 6.0 | **8.9** | 6.0 | **7.5** |
| Elastomag 170 | 3.0 | **8.5** | 3.0 | **7.2** | 3.0 | **5.5** | 3.0 | **4.4** | 3.0 | **3.7** |
| Struktol WS-280 | 1.00 | **2.8** | 1.00 | **2.4** | 1.00 | **1.8** | 1.00 | **1.5** | 1.00 | **1.2** |
| Tecnoflon FPA-1 | 1.00 | **2.8** | 1.00 | **2.4** | 1.00 | **1.8** | 1.00 | **1.5** | 1.00 | **1.2** |

The examples and other embodiments described herein are exemplary and not intended to be limiting in describing the full scope of compositions and methods of this invention. Equivalent changes, modifications and variations of specific embodiments, materials, compositions and methods may be made within the scope of the present invention, with substantially similar results.

## Claims

1. A method for making a rubber composition comprising: mixing a fluorocarbon elastomer and thermoplastic material in the presence of a high temperature processing aid; dynamically vulcanizing the mixture.

2. A method according to claim 1, wherein the high temperature processing aid comprises a blend of linear fatty alcohols.

3. A method according to claim 2, wherein the linear fatty alcohol has more than 10 carbon atoms.

4. A method according to claim 2, wherein the linear fatty alcohol comprises a blend of 1-Docosan, 1-Eicosan and 1-Octadecan.

5. A method according to claim 1, wherein the high temperature processing aid comprises functionalized perfluoropolyethers.

6. A method according to claim 5, wherein the functionalized perfluoropolyether comprises a wax form with a melting point greater than about 50°C.

7. A method according to claim 1, wherein the high temperature processing aid comprises organosilicone compounds.

8. A method according to claim 7, wherein the organosilicone compound comprises an inorganic carrier.

9. A method according to claim 1, wherein the high temperature processing aid is selected from the group consisting of: a functionalized perfluoropolyether, a blend of linear fatty alcohols, an organosilicone compound, and mixtures thereof.

10. A method according to claim 1, wherein the composition comprises between about 35 to about 50 parts by weight vulcanized elastomeric material per 100 parts of the vulcanized elastomeric material and thermoplastic material combined.

11. A method according to claim 1, wherein the high temperature processing aid is present in an amount between about 0.1 to about 5% by weight of the total composition.

12. A method according to claim 11, wherein the high temperature processing aid is present in an amount between about 0.1 to about 2% by weight of the total composition.

13. A method according to claim 1, comprising a batch process.

14. A method according to claim 1, comprising a continuous process.

15. A method according to claim 1, carried out in a twin screw extruder.

16. A method according to claim 1, further comprising adding a curative agent selected from the group consisting of: a peroxide, a bisphenol, and a diamine.

17. A method according to claim 1, comprising mixing the elastomeric material, thermoplastic material, and high temperature processing aid for a time and at a shear rate sufficient to form a uniform dispersion.

18. A formed composition comprising: a fluorocarbon elastomer; a thermoplastic material; and a high temperature processing aid; wherein the composition is dynamically vulcanized.

19. A composition according to claim 18, wherein the high temperature processing aid comprises a blend of linear fatty alcohols.

20. A composition according to claim 19, wherein the linear fatty alcohol has more than 10 carbon atoms.

21. A composition according to claim 19, wherein the linear fatty alcohol comprises a blend of 1-Docosan, 1-Eicosan and 1-Octadecan.

22. A composition according to claim 18, wherein the high temperature processing aid comprises functionalized perfluoropolyethers.

23. A composition according to claim 22, wherein the functionalized perfluoropolyether comprises a wax form with a melting point greater than 50°C.

24. A composition according to claim 18, wherein the high temperature processing aid comprises organosilicone compounds.

25. A composition according to claim 24, wherein the organosilicone compound comprises an inorganic carrier.

26. A composition according to claim 18, created by an injection molding process.

27. A composition according to claim 18, created by an extrusion molding process.

28. A composition according to claim 18, wherein the high temperature processing aid is present in an amount between about 0.1 to about 5% by weight of the total composition.

29. A composition according to claim 28, wherein the high temperature processing aid is present in an amount between about 0.1 to about 2% by weight of the total composition.

30. A seal according to claim 18.

31. An O-ring according to claim 18.

32. A gasket according to claim 18.

33. A hose according to claim 18.

34. A composition according to claim 18, wherein the thermoplastic material comprises an amorphous polymer with a glass transition temperature greater than or equal to 150°C.

35. A composition according to claim 18, wherein the high temperature processing aid is added in an amount between about 0.1 to about 5% by weight of the total composition.

36. A composition according to claim 18, wherein the high temperature processing aid is selected from the group consisting of: a functionalized perfluoropolyether, a blend of linear fatty alcohols, an organosilicone compound, and mixtures thereof.

37. A composition according to claim 18, wherein the fluorocarbon elastomer is present at a level of greater than or equal to 35% by weight of the total material.

38. A thermoprocessable rubber composition made by a process comprising dynamically vulcanizing a fluorocarbon elastomer in the presence of a non-fluorine-containing thermoplastic material and a high temperature processing aid.

39. A composition according to claim 38, made by a process comprising: mixing the elastomer and thermoplastic components; adding a high temperature processing aid and curative agent to the mixture; and heating during mixture to effect cure of the elastomeric components.

40. A composition according to claim 39, wherein the elastomer and thermoplastic components are mixed in the presence of the high temperature processing aid and curative agent.

41. A composition according to claim 39, wherein the elastomer and thermoplastic components are mixed to form a dispersion of the elastomeric material in a continuous thermoplastic phase prior to adding the curative agent and high temperature processing aid.

42. A composition according to claim 38, wherein the high temperature processing aid is selected from the group consisting of: a functionalized perfluoropolyether, a blend of linear fatty alcohols, an organosilicone compound, and mixtures thereof.

43. A composition according to claim 38, wherein the high temperature processing aid is present in an amount between about 0.1 to about 5% by weight of the total composition.

44. A composition according to claim 43, wherein the high temperature processing aid is present in an amount between about 0.1 to about 2% by weight of the total composition.
